Europäisches Patentamt

European Patent Office

Office européen des brevets

(11) Publication number: **0 342 264**
**A2**

(12) # EUROPEAN PATENT APPLICATION

(21) Application number: **88111190.0**

(22) Date of filing: **13.07.88**

(51) Int. Cl.⁴: **C22B X**

(30) Priority: **07.05.88 EP 88107361**

(43) Date of publication of application:
**23.11.89 Bulletin 89/47**

(84) Designated Contracting States:
**BE CH DE ES FR GB IT LI NL SE**

(71) Applicant: **WARNER FRANCE**
**Route de Spay**
**F-72700 Allonnes(FR)**

(72) Inventor: **Guidicelli, Guy**
**Wutachtaiblick 36**
**D-7823 Bonndorf/Guendelwangen(DE)**

(74) Representative: **Hoeger, Stellrecht & Partner**
**Uhlandstrasse 14 c**
**D-7000 Stuttgart 1(DE)**

(54) **Electrical clutch or breaking device.**

(57) The invention relates to an electrically operable clutch or the like. According to the invention a coupling arrangement between rotatable input and output elements (12, 14) comprises at least one electrically controllable member (18) having a length being variable in a predetermined direction by the application of electrical signals so as to open or close a gap between said input and output elements (12, 14) to be coupled with one another.

FIG.1

EP 0 342 264 A2

## Electrical Clutch or Braking Device

The invention relates to an electrically operable clutch or brake device comprising a driving member, a driven or brake member and a coupling arrangement electrically and selectively operable to generate or release a friction connection between said driving member and said driven or brake member.

Clutch or braking devices of this type are known in a number of embodiments and particularly in the form of electromagnetically operable devices. In such devices, one of the elements to be coupled mounts an electromagnet while the other bears or forms an armature which is activated by the electromagnet when this is energized. An air gap otherwise separating the parts is then closed and the coupling parts are frictionally connected with one another. In addition, electromagnetic couplings or clutches are known, in which the coupled state is brought about by spring tension which is overcome by switching on the electromagnet in order to release a friction connection existing at that time.

Although the known electromagnetic clutch or braking devices generally operate satisfactorily in their various embodiments, closer consideration of the known clutch or braking devices shows that an electromagnet which is capable of generating the forces required for bringing about or releasing a coupling connection needs a considerable amount of space and energy and is relatively costly to manufacture.

Proceeding on the basis of the state of the art, the object underlying the invention is to improve an electrically operable coupling or brake device of the type described at the outset such that the actual coupling arrangement has considerably reduced space and energy requirements and is cheaper to produce.

This object is accomplished in accordance with the invention, for a clutch or brake device of the type in question, in that the coupling arrangement comprises at least one electrically responsive member, the length thereof being variable in a predetermined direction by applying or cutting off an electrical signal to open or close a gap between two components to be coupled with one another.

A particular advantage of the invention is the fact that electrically responsive members, in particular piezo elements and magnetostrictive elements, the dimensions of which may be altered in a predetermined direction by applying or switching off an electrical signal, are available as simple, relatively small components and at a reasonable price. Their energy requirements are considerably less than the energy requirements of an electromagnet and they develop greater forces which are entirely adequate for generating and releasing a drive connection or for engaging or disengaging a brake.

Ceramic piezo elements are, according to the invention, particulary preferred as electrically responsive members since the piezoelectrical ceramic material has a high tensile strength and temperature stability and so it would be eminently suitable for harsh day-to-day use, for example in the brake system of a motor vehicle.

A particularly preferred embodiment of a device according to the invention is characterized in that the driving member is designed as a rotor non-rotatably mounted on a drive shaft which is adapted to be driven in rotary motion, that the driven or brake member comprises a carrier disc arranged concentrically to the rotor, the electrically responsive member being arranged on the side of the carrier disc facing the rotor, and that the electrically responsive member is designed such that it expands in axial direction when the electrical signal is applied and thereby causes an axial gap of a predetermined length, which is provided between the rotor and the carrier disc, to close in order to couple the rotor and the carrier disc with one another in a frictional manner. With this construction of the inventive device it is possible to fall back on the clutch or brake constructions of electromagnetically operable couplings or brakes and there is the possibility of converting existing clutch or brake devices, in particular in the course of replacing parts subject to wear and tear which takes place in any case, such that an electromagnet previously used is substituted by a piezoelectrically operable arrangement. In order to achieve a symmetrical generation of braking and coupling forces, a plurality of piezo elements are preferably used and can, for example, be disposed symmetrically to the drive shaft in accordance with the arrangement of the poles of an electromagnet as previously used.

It is also advantageous, in development of the invention and in the preferred construction of the inventive device described above, for the rotor and/or the carrier disc to be provided with a friction lining adapted to be pressed against a counter-surface in response to the axial length-extension of the electrically responsive member, in particular the piezo element. In this respect, the electrically responsive member is preferably provided between the carrier disc and an axially displaceable friction lining or friction lining carrier connected therewith in order to press the friction lining against the counter-surface of the rotor. In this case, the coupling or brake is actuated when an electrical signal is applied to the electrically responsive member.

In an advantageous development of the invention, it is possible for the electrically responsive member to be disposed between a shoulder of the friction lining carrier means and a shoulder of the carrier disc remote from the rotor and for the friction lining carrier means to be resiliently biased towards the rotor. In this case, the coupling or brake is engaged as long as no electrical signal is applied to the responsive member. As soon as such a signal is generated, the brake or coupling is released contrary to the spring force acting on the friction lining carrier means.

In a further development of the invention, it is again possible for a friction or brake lining to be provided on both sides of the rotor to achieve an increase in the braking or coupling force.

Moreover, it is possible in development of the invention and when using the inventive device as a brake device to design the driven member itself as a brake disc which is mounted so as to be fixed with respect to the housing.

In a further development of the invention it has also proven favourable for the electrically responsive member to be connected to the central portion of a leaf spring and to be designed or disposed such that when an electrical signal is applied its shape alters in the form of a contraction parallel to the adjacent main face of the leaf spring and causes a reversible curving thereof. The leaf spring is preferably designed in the shape of a circular disc and is provided along its edge region with a friction lining. The special advantage of this constructive solution is to be seen in the fact that the leaf spring is deformed by the electrically responsive member in a similar manner to a bimetallic element. This preferably causes the leaf spring to snap over. The edge of the leaf spring provided with the friction lining then undergoes an effective displacement which is considerably greater than the length extension of the responsive member in radial direction. In this way, it is possible to bridge a larger gap for activating the brake or clutch which makes it possible to operate with more approximate manufacturing tolerances and further reduce costs.

A further advantageous possibility of increasing the effective displacement achieved by the alteration in shape of the responsive member is to have the electrically responsive member of the invention connected to an adjustable part of the coupling or brake arrangement via a lever mechanism. The lever mechanism is then designed such that the alteration in shape of the responsive member is converted into an increased effective displacement of the adjustable part.

Irrespective of the constructional design of the inventive clutch or braking device, the essential advantage resulting in all cases is the fact that the response time is shorter in relation to electromagnetic devices in the order of a factor of 100 to 1000. This is of decisive significance, especially in conjunction with the automatic braking and starting systems increasingly used for motor vehicles. At the same time, the energy required for activating the brake or clutch is reduced by about a factor of 1000, especially when using piezo elements, and, according to the invention, is then within the milliampere range whereas currents in the ampere range are required for electromagnetic devices. On the other hand, the control voltages required for modern piezoelectric materials in the range of about 200 V can be generated without difficulty from the battery voltage of a motor vehicle.

Further details and advantages of the invention are explained in more detail in the following on the basis of drawings, in which

Fig. 1 is a schematic cross-sectional illustration of a first preferred embodiment of a braking device according to the invention;

Fig. 2 is a schematic cross-sectional illustration of a second preferred embodiment of a braking device according to the invention;

Fig. 3 is a schematic cross-sectional illustration of a third embodiment of a braking device according to the invention and

Fig. 4 is a schematic illustration to explain the functioning of the braking device of Fig. 3.

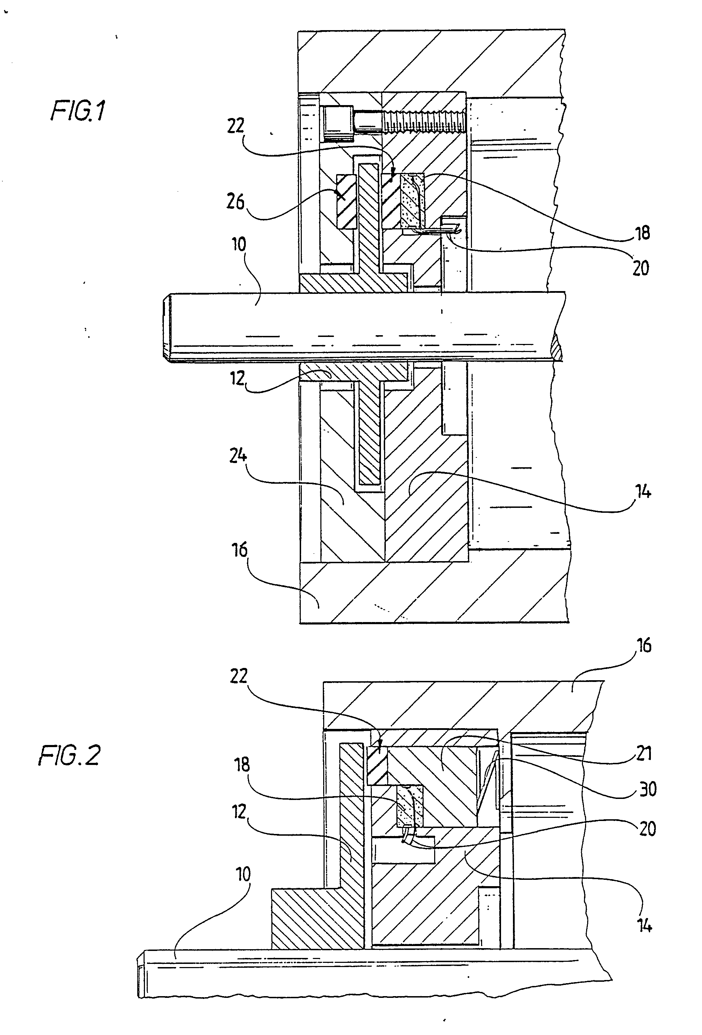

Fig. 1 shows in detail the essential elements of an inventive brake for braking a rotor 12 seated so as to be non-rotatable on a shaft 10 which can be driven so as to rotate. A carrier disc 14 is arranged adjacent one side of the rotor 12 and is rigidly mounted on an engine casing 16 or other, stationary component. A piezo element 18 is mounted in a recess in the carrier disc 14 and a control signal from a control signal source (not illustrated) can be applied to this element via electric conductors 20. In addition, a friction lining 22 is provided on the side of the piezo element 18 facing the rotor 12. The piezo element 18 and its electrodes which are connected to the electric conductors 20 are designed and arranged such that when a corresponding signal voltage of, for example, about 200 V is applied to the piezo element 18 it undergoes an alteration in shape in that its thickness or length noticeably increases in axial direction, i.e. in the direction of the axis of rotation of the shaft 10. This causes a corresponding axial movement of the surface of the piezo element 18 facing the rotor 12. Since the friction lining 22 is mounted on this suface of the piezo element 18 - normally by means of a separate friction lining carrier means which is not, however, illustrated in the drawing - a corresponding axial movement of the friction lining against the surface of the rotor 12 lying opposite thereto consequently results. The rotor is therefore braked due to friction contact with the friction lining 22. The braking effect is improved still further in the illustrated embodiment by the carrier disc 14 being non-rotatably connected with a counter-disc 24 on the opposite side of the rotor 12. An additional friction lining 26 is embedded in this disc 24 and comes into friction contact with the other side of the rotor 12 even when the rotor 12 is slightly axially deflected due to activation of the piezo element 18.

In the schematic illustration of Fig. 1, only one piezo element 18 is provided. In practice, a plurality of piezo elements 18, which are evenly distributed around the periphery of the carrier disc, will be provided and in any case at least two piezo elements arranged diametrally opposite one another to avoid an uneven stress on the rotor 12 and shaft 10 and at the same time to achieve increased braking force. The piezo elements 18 can themselves be curved elements which extend over a greater or lesser circumferential angle of the carrier disc 14 or of the rotor 12 arranged opposite it. In addition, the friction linings 22, 26 can be designed as circular rings and these rings or their carriers supported at a distance from the piezo elements 18. Furthermore, the rotor 12 can be arranged on the shaft 10 so as to be non-rotatable but axially displaceable so as to prevent any canting or deformation of the rotor 12 during braking. Moreover, it is clear from the schematic illustration of Fig. 1 that the elements 14 and 24 form, in principle, a typical brake mounting means such as that provided, for example, in disc brakes for motor vehicles for accommodating the friction linings or brake shoes.

The embodiment schematically illustrated in Fig. 2 again comprises a shaft 10, a rotor 12, a carrier disc 14 which is fixed in relation to the housing and a piezo element 18 with which a friction lining 22 mounted on a lining carrier means 21 is associated. The piezo element 18 is, according to Fig. 2, arranged between a shoulder of the carrier disc 14 facing away from the rotor 12 and a shoulder of the friction lining carrier means 21 arranged opposite said carrier disc shoulder. The carrier means 21 with its friction lining 22 is biased by a spring 30 in axial direction against the rotor 12 such that the friction lining 22 normally, i.e. when the piezo element 18 is not activated, engages and brakes the rotor 12 and, with it, the shaft 10. If a corresponding control voltage is then applied to the piezo element 18, its thickness or length will increase in size in axial direction, as described above for the piezo element used in Fig. 1, which will cause the carrier means 21 to move away from the rotor 12 in axial direction - to the right in Fig. 2. This means that the friction lining 22 is lifted off and releases the rotor 12. Whereas, in the embodiment of Fig. 1, the rotor 12 is braked when a control voltage is applied to the piezo element 18, the brake of Fig. 2 operates such that the rotor 12 is braked in the inoperative state of the piezo element 18 and released when the piezo element is activated. Furthermore, it is clear from the above description of Figs. 1 and 2 that the carrier disc which is non-rotatably mounted or so as to be fixed in relation to the housing could also be designed as a rotatable component or as a driven member of a clutch which would be frictionally driven by the rotor 12 in a state corresponding to the braking state of the brakes described.

In the embodiments shown in Figs. 1 and 2, the effective displacement or length extension of the piezo element due to a corresponding control voltage being applied is utilized directly, i.e. without any mechanical step-up. It should be mentioned at this point that the inventive braking or clutch device requires only a minimal control current of a few milliamperes.

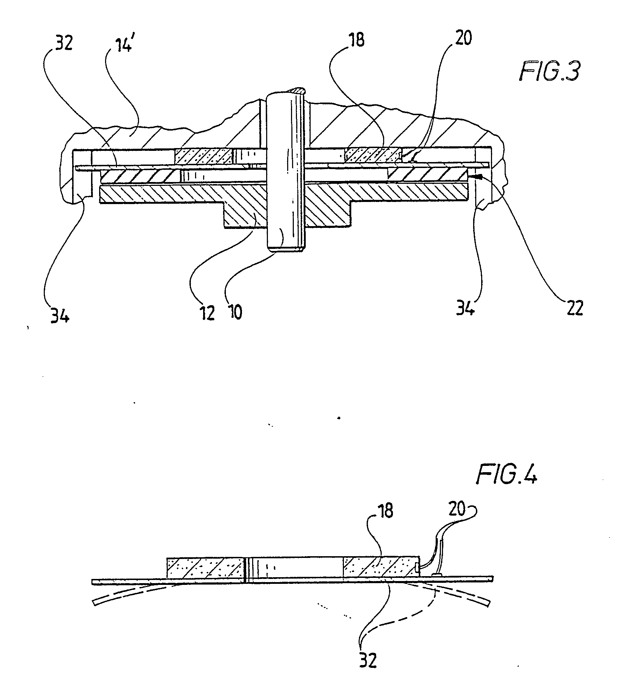

A greater effective displacement of the friction or brake linings can be achieved in the embodiment according to Fig. 3, as will be explained in greater detail in the following.

Fig. 3 shows in detail a piezo element 18 in the form of a ring, made in particular of a piezoelectric ceramic material, encircling the shaft 10. It is also possible to use a plurality of individual piezo elements 18 instead of the ring. The piezo element 18 is arranged in a housing element 14' which corresponds to the carrier disc 14 of the embodiments shown in Figs. 1 and 2 which is fixed in relation to the housing. The opposite surface of the piezo element 18 is connected, especially adhered, to a circular ring-shaped leaf spring 32 made in particular of an elastically deformable, spring-hard metal.

In contrast to the first two embodiments, the piezo element of the embodiment according to Fig. 3 is selected and controlled or activated such that the application of a correspondingly high signal voltage results in the piezo material expanding in radial direction. Such a radial expansion of the piezo material leads to the leaf spring curving, as with a bimetallic element, whereby the edge of the leaf spring moves from the position shown by solid lines in Fig. 4 into the position shown by broken lines. The effective displacement of the edge of the leaf spring 32, which carries a circular ring-shaped friction lining 22 is clearly greater than the axial effective displacement achieved by activation of the piezo element 18 in Figs. 1 or 2. Moreover, by designing the leaf spring 32 accordingly, it is possible to again achieve a snap effect similar to that with bimetallic springs. This means that the moment at which braking occurs, and immediately with the full braking force, can be determined very accurately. The leaf spring 32 is provided around its periphery with at least one recess which cooperates with an associated projection 34 in the housing portion 14' to secure the leaf spring 32 against rotation.

**Claims**

1. Electrically operable clutch or brake device comprising a driving member, a driven or brake member and a coupling arrangement electrically and selectively operable to generate or release a friction connection between said driving member and said driven or brake member, characterized in that said coupling arrangement comprises at least one electrically controllable (responsive) member (18), the length thereof being variable in a predetermined direction by applying or cutting off an electrical signal to open or close a gap between two components (12, 14) to be coupled with one another.

2. Device as defined in claim 1, characterized in that said electrically responsive member is designed as a piezo element (18).

3. Device as defined in claim 1, characterized in that said electrically responsive member is a magnetostrictive element.

4. Device as defined in any of claims 1 to 3, characterized in that said driving member is designed as a rotor (12) non-rotatably mounted on a drive shaft (10) adapted to be driven in rotary motion, that said driven or brake member comprises a carrier disc (14) arranged concentrically to said rotor (12), said electrically responsive member (18) being arranged on the side of said carrier disc facing said rotor (12), and that said electrically responsive member (18) is designed such that it expands in axial direction when said electrical signal is applied and thereby causes an axial gap of a predetermined length and provided between said rotor (12) and said carrier disc (14) to close in order to couple said rotor (12) and said carrier disc (14) with one another in a frictional manner.

5. Device as defined in claim 4, characterized in that said rotor (12) and/or said carrier disc (14) are provided with a friction lining (22, 26) adapted to be pressed against a counter-surface in response to the axial length-extension of said electrically responsive member (18).

6. Device as defined in claim 5, characterized in that said electrically responsive member (18) is provided between said carrier disc (14) and an axially displaceable friction lining (22) connected therewith and adapted to be pressed against the counter-surface of said rotor (12).

7. Device as defined in claim 6, characterized in that said electrically responsive member (18) is disposed between a shoulder of a friction lining carrier means (21) and a shoulder of said carrier disc (14) remote from said rotor (12), and that said friction lining carrier means (21) is resiliently biased towards said rotor (12).

8. Device as defined in any of claims 4 to 7, characterized in that said carrier disc (14) is non-rotatably connected with a counter-disc (24) on the opposite side of said rotor (12), and that an additional friction lining (26) is provided between said rotor (12) and said counter-disc (24) and is non-rotatably connected to one of said elements.

9. Braking device as defined in any of claims 1 to 8, characterized in that said brake member is designed as a carrier disc (14) mounted so as to be fixed with respect to the housing.

10. Device as defined in any of claims 1 to 9, characterized in that said electrically responsive member (18) is connected to the central portion of a leaf spring (32) and is designed or rather disposed such that when an electrical signal is applied its shape alters in the form of an extension in radial direction and causes a reversible curving of the leaf spring (32).

11. Device as defined in claim 10, characterized in that the leaf spring (32) is designed in the shape of a circular disc and is provided along its edge region with a friction lining (22).

12. Device as defined in any of claims 1 to 9, characterized in that said electrically responsive member is connected with an adjustable part of said coupling arrangement via a lever mechanism.

FIG.1

22

26

10

18

20

12

24

14

16

FIG.2

22

18

12

10

16

21

30

20

14

*FIG.3*

*FIG.4*